# EUROPÄISCHE PATENTSCHRIFT

(11) **EP 2 469 224 B1**
(45) Veröffentlichungstag und Bekanntmachung des Hinweises auf die Patenterteilung: **13.03.2019**
(21) Anmeldenummer: 12159570.6
(22) Anmeldetag: 14.11.2008
(51) Int. Cl.: G01B 11/25, A61C 9/00

(54) **Verfahren zur intraoralen optischen Vermessung von Objekten unter Verwendung eines Triangulationsverfahrens**
Method for intra-oral optical measurement of objects using a triangulation method
Procédé de mesure optique intra-orale d'objets en utilisant un procédé de triangulation

(30) Priorität: 15.11.2007 DE 102007054907
(43) Veröffentlichungstag der Anmeldung: 27.06.2012
(62) Teilanmeldung aus: 08850650.6
(73) Patentinhaber: Sirona Dental Systems GmbH, 64625 Bensheim (DE)
(72) Erfinder: Pfeiffer, Joachim, 64625 Bensheim (DE); Thiel, Frank, 64372 Ober-Ramstadt (DE)
(74) Vertreter: Sommer, Peter

(56) Entgegenhaltungen:
- WO-A-93/03579
- WO-A-2004/085956
- WO-A-2007/061632
- DE-A1- 4 007 502
- DE-A1- 19 747 061
- US-A1- 2003 223 083
- US-A1- 2004 105 580
- US-A1- 2004 151 365
- US-A1- 2005 088 529
- US-B1- 6 542 249
- US-B1- 6 603 103

## Beschreibung

### Technisches Gebiet

Die Erfindung betrifft ein Verfahren zur optischen Vermessung der dreidimensionalen Geometrie von Objekten und befasst sich mit der Aufgabenstellung der 3D-Vermessung bei relativer Bewegung zwischen der Kamera und dem Objekt während des Messprozesses, insbesondere für zahnmedizinische Zwecke.

### Stand der Technik

Durch eine optische 3D-Vermessung eines oder mehrerer Zähne im Mund eines Patienten können digitale Konstruktionsdaten für die rechnergesteuerte Anfertigung von Zahnersatz ohne die Erstellung eines herkömmlichen Abdrucks gewonnen werden.

Für diese Vermessung werden oft Messmethoden verwendet, die auf dem Prinzip der Triangulation basieren. Aus der EP 0 160 797 ist eine Phase-Shifting-Triangulation (Phasenschiebeverfahren) bekannt, bei der aus mehreren Aufnahmen mit einem jeweils von einer Aufnahme zum anderen versetzt angeordneten Raster ein 3D-Datensatz gewonnen wird.

Bei bekannten Triangulationsverfahren wird von einer Projektionseinrichtung ein einzelner gerader Lichtstrich auf das aufzunehmende Objekt aufprojiziert und das projizierte Bild wird unter einem in Beobachtungsrichtung liegenden Parallaxe-Winkel mit einer Kamera aufgenommen, sodass eine Aufnahme vorliegt.

Abhängig von der Oberflächenstruktur des Objekts erscheint der Lichtstrich nicht mehr gerade, sondern gegenüber dem geraden Verlauf gekrümmt und verschoben. Aus der Lage und aus dem Verlauf des Lichtstrichs kann auf die Oberflächenstruktur des Aufnahmeobjekts geschlossen werden.

Durch ein Verschieben des Lichtstrichs in einer Richtung senkrecht zur Erstreckungsrichtung des Lichtstrichs kann das gesamte Aufnahmeobjekt abgetastet werden, sodass Aufnahmen entstehen. Die aus jeder der Aufnahmen gewonnenen Höheninformationen des Aufnahmeobjekts können in einem zweidimensionalen Raster im Speicher eines Rechners abgespeichert werden, was einer Projektion der Höheninformationen der Oberfläche des Aufnahmeobjekts auf eine Grundfläche als Referenzebene entspricht. Nach dem Messvorgang liegt ein digitales 3-dimensionales Datenmodell des Aufnahmeobjekts vor, welches z.B. auf einem Monitor als Videostandbild dargestellt werden kann.

Aus der Schrift WO 2004/085956 A2 ist ein Verfahren zur Erstellung eines 3-dimensionalen Bildes eines Aufnahmeobjekts bekannt, welches die zuletzt beschriebene Messmethode dahingehend verbessert, dass während einer Aufnahme Pi die Oberflächenstruktur des Aufnahmeobjekts vollständig vermessen wird.

Der Lichtstrich kann z.B. durch schnelles Bewegen des Lichtstrahls eines Lasers während der Dauer einer Aufnahme erzeugt werden, d.h. der Lichtstrich ist eigentlich aus Lichtpunkten aufgebaut. Während einer Aufnahme Pi wird also ein punktförmiger Lichtstrahl eines Lasers entlang eines 2-dimensionalen Lichtstreifenmusters, bei dem zumindest ein Teil der Lichtstreifen im Wesentlichen parallel zueinander, also in einer Richtung Rl, verlaufen, über das Aufnahmeobjekt geführt. Zwischen den Lichtstreifen ist dabei ein Zwischenraum vorgesehen.

Während einer Aufnahme werden im Wesentlichen die Höheninformation des Aufnahmeobjekts entlang mehrerer paralleler, beabstandeter Lichtstreifenstücke oder Striche erfasst.

Damit liegen nach einer Aufnahme bereits die Höheninformationen des Aufnahmeobjekts in einer ersten Gruppe von mehreren, beabstandeten Zeilen des 2-dimensionalen Rasters des zu erstellenden 3D-Datensatzes vor.

Bei den beiden beschriebenen Verfahren der während jeweils einer Aufnahme quasi-statischen Streifenprojektion mit einem Strich pro Aufnahme oder mit mehreren beabstandeten Strichen pro Aufnahme, wie aus der WO 2004/085956 A2 bekannt, werden die mittels der einzelnen Aufnahmen gewonnenen unabhängigen Höheninformationen zu einem Gesamtfeld zusammengeführt, welches die Gesamtheit der gewonnenen 3D-Daten des Aufnahmeobjekts beschreibt bzw. beinhaltet.

Die beschriebenen Messmethoden unter Verwendung von Triangulation haben den Nachteil, dass bedingt durch den Umstand, dass die einzelnen Aufnahmen in zeitlich aufeinanderfolgender Reihenfolge aufgenommen werden und anschließend aus einem Satz von mindestens zwei Aufnahmen eine gesamte Aufnahme zusammengesetzt wird, ein Verwackeln der Aufnahmevorrichtung relativ zum Objekt zwischen den einzelnen Aufnahmen zu Bildfehlern führen kann. Die Aufnahmevorrichtung muss also während der Aufnahme eines Satzes von Aufnahmen gegenüber dem Objekt in ihrer Lage unverändert bleiben und kann erst im nächsten Schritt zur Aufnahme eines nächsten Satzes in ihrer Lage verändert werden. Eine Überflugmessung (on-the-fly-Messung) des Objekts, bei der in kurzen Zeitintervallen mehrere vollständige Aufnahmen vom Objekt aufgenommen werden, ist dadurch unmöglich.

Intraorale dentale Kameras, die eine Musterprojektion verwenden, sind in US 2005/0088529 A1 und WO 2004/085956 A2 offenbart. Musterprojektion wird auch in WO 2007/061632 A2 offenbart

Die sich ergebende Aufgabe besteht also darin, ein Verfahren zur optischen Vermessung von Objekten unter Verwendung eines Triangulationsverfahrens, insbesondere für zahnmedizinische Zwecke, zur Verfügung zu stellen, welches eine Überflugmessung ermöglicht.

### Darstellung der Erfindung

Diese Aufgabe wird durch die im Folgenden angegebenen Merkmale gelöst. Die Erfindung ist in dem beigefügten unabhängigen Anspruch definiert.

Gemäß der Erfindung wird ein Verfahren zur optischen Vermessung der dreidimensionalen Geometrie eines Objekts unter Verwendung eines Triangulationsverfahrens mittels einer optischen intraoralen dentalen Kamera zur Verfügung gestellt. Die intraorale dentale Kamera umfasst mindestens eine Lichtquelle, mindestens ein Blendenmittel zur Erzeugung von strukturierten Mustern und mindestens ein Aufnahmemittel. Mittels eines ersten Blendenmittels wird ein erstes Muster erzeugt und auf das aufzunehmende Objekt als ein erster Projektionsstrahl projiziert, wobei mittels mindestens eines weiteren Blendenmittels ein weiteres Muster erzeugt wird und auf das aufzunehmende Objekt als ein weiterer Projektionsstrahl projiziert wird, wobei das erste Muster und das weitere Muster vom Objekt als Beobachtungsstrahlen zurückgestrahlt werden und von dem mindestens einen Aufnahmemittel aufgenommen werden, um einen 3D-Datensatz des Objekts zu gewinnen. Das projizierte erste Muster und das weitere Muster in mindestens einer Triangulationsaufnahme werden unter Verwendung des mindestens einen Aufnahmemittels gleichzeitig aufgenommen. Für weitere Merkmale der Erfindung wird auf Anspruch 1 verwiesen.

Das bei der vorliegenden Erfindung verwendete Triangulationsverfahren beruht auf dem folgenden Grundprinzip.

Ein bestimmter Messpunkt eines Objekt wird aus einer Richtung von einem Projektionsstrahl beleuchtet und als Beobachtungsstrahl aus einer anderen Richtung durch einen Sensor aufgenommenen.

Dabei erhält man die beiden Winkel zwischen einer Basislänge, die die Lichtquelle mit dem Sensor verbindet, und dem Projektionsstrahl sowie dem Beobachtungsstrahl. Unter Kenntnis der Basislänge kann man dann die Koordinaten des Messpunktes relativ zum Koordinatensystem der intraoralen dentalen Kamera bestimmen, die die Lichtquelle und den Sensor umfasst.

Die vorliegende Erfindung verwendet vorteilhafterweise ein Streifenprojektionsverfahren, wobei ein Muster aus parallelen Streifen auf das Objekt projiziert wird und dadurch mehrere Messpunkte gleichzeitig vermessen werden können.

Zur Bestimmung der Koordinate des Messpunktes muss eine Projektionskoordinate bekannt sein, die einem Messpunkt eine Bildkoordinate auf dem Zensor zuordnet. Die Messpunkte müssen also den jeweiligen Streifen zugeordnet sein.

Diese Zuordnung kann durch Abzählen der Streifen erfolgen, indem die Folge von Helligkeitswerte auf den Sensor ausgewertet wird und somit die Nummer des jeweiligen Streifens bestimmt wird.

Diese Zuordnung kann auch durch ein Binär-Code-Verfahren (z.B. Gray Code) erfolgen, indem jeder Streifen eine binäre Abfolge von Helligkeitswerten enthält, die die Nummer des Streifens repräsentiert. Beim Auswerten dieses binären Codes kann dann die jeweilige Nummer des Streifens bestimmt werden.

Eine höhere Genauigkeit bei der Zuordnung der Projektionskoordinate kann durch das sogenannte Phasenschiebeverfahren (Phase-Shift-Verfahren) erreicht werden, wobei beim Phasenschiebeverfahren die 3D-Daten des Objekts erst nach der Auswertung von mindestens vier zueinander phasenverschobenen Einzelaufnahmen erzeugt werden können. Die Helligkeitswerte der einzelnen Streifen weisen einen sinusförmigen Verlauf auf, dessen Phase sich in den Mustern der einzelnen Triangulationsaufnahme unterscheidet. Zu jedem Messpunkt ergeben sich demnach mindestens vier Helligkeitswerte aus den einzelnen Triangulationsaufnahmen, woraus nach einem mathematischen Verfahren die Phaselage dieses Messpunktes berechnet werden kann und anschließend aus der Phaselage die Position des Messpunktes auf einer Koordinatenachse senkrecht zu den Streifen bestimmt werden kann.

Der Vorteil der Zuordnung durch das Abzählen und durch das Binär-Code-Verfahren besteht also darin, dass die 3D-Daten des durch das Muster beleuchteten Messbereichs nach jeder einzelnen Triangulationsaufnahme sofort erzeugt werden können.

Der Vorteil des Phasenschiebeverfahrens ist, dass im Gegensatz zum Abzählen oder zum Binär-Code-Verfahren ein Messpunkt nicht einem bestimmten Streifen und damit einer diskreten Koordinate zugeordnet wird, sondern eine nicht diskrete Koordinate des Messpunktes bestimmt wird, die auch zwischen zwei Streifen liegen kann. Dadurch wird folglich eine höhere Messgenauigkeit erreicht.

Das Muster kann aus einem einzelnen Streifen oder aus mehreren parallelen Streifen aufgebaut sein.

Die intraorale dentale Kamera, die in dem Verfahren der Erfindung verwendet wird, kann mindestens eine Lichtquelle umfassen, die ein herkömmliches Leuchtmittel, eine farbliche LED, eine weiße LED oder ein Laser sein kann. Für das Triangulationsverfahren ist sowohl monochromatische als auch polychromatisches Licht geeignet. Die Lichtquellen für die einzelnen Muster können sich in ihrer Wellenlänge unterscheiden, damit Sie in einer gemeinsamen Triangulationsaufnahme voneinander getrennt werden können.

Die intraorale dentale Kamera umfasst mehrere Blendenmittel zur Erzeugung von strukturierten Mustern, wobei jedes Mittel ein Muster erzeugen kann. Das Blendenmittel kann ein optisches Gitter sein, das strukturierte Schlitze aufweist. Die strukturierten Schlitze können zueinander parallele Streifen sein.

Das aufzunehmende Objekt kann ein beliebiges dreidimensionales Objekt sein, wobei das vorliegende Verfahren insbesondere zur Aufnahme von Zähnen geeignet ist.

Das Licht der Lichtquelle durchstrahlt das Blendenmittel, so dass ein strukturiertes Muster entsteht, welches als ein Projektionsstrahl auf das Objekt projiziert wird. Das Licht des projizierten Musters wird dann vom Objekt als ein Beobachtungsstrahl zurückgestrahlt und von mindestens einem Aufnahmemittel in mindestens einer Triangulationsaufnahme gleichzeitig mit den anderen Mustern aufgenommen. Das Aufnahmemittel kann ein optischer Sensor, insbesondere ein CCD-Sensor, sein. Die projizierten Muster können aus unterschiedlichen Beobachtungsrichtungen in mehreren Triangulationsaufnahmen aufgenommen werden.

Die verschiedenen Muster aus der Triangulationsaufnahme werden getrennt voneinander analysiert und 3D-Daten der Bereiche erzeugt, die von den Mustern erfasst wurden, und anschließend aus den einzelnen 3D-Daten der Muster ein 3D-Datensatz des Objekts zusammengesetzt.

Ein Vorteil des erfinderischen Verfahrens ist, dass die einzelnen auf das Objekt projizierten Muster gleichzeitig aufgenommen werden. Bei herkömmlichen Verfahren werden die einzelnen Muster in getrennten Aufnahmen in zeitliche Abfolge nacheinander aufgenommen. Dadurch kann die intraorale dentale Kamera zwischen den Aufnahmen Verwackeln und somit ihre relative Lage zum Objekt ändern. Dieser Verwacklungsfehler kann dann anschließend durch aufwändige computergestützte Verfahren korrigiert werden. Die Gefahr der Verwacklung besteht jedoch wegen der simultanen Aufnahme der Muster beim vorliegenden Verfahren nicht.

Ein weiterer Vorteil des vorliegenden Verfahrens ist, dass eine Überflugmessung (on-the-fly-Messung) ermöglicht wird. Bei den herkömmlichen Verfahren konnte ein bestimmter Messbereich in einem Satz von zeitlich nacheinander folgenden Triangulationsaufnahmen mit versetzten Mustern abgetastet werden, wobei die relativen Lagen der intraoralen Kamera zum Objekt während der Aufnahme eines Satzes möglichst unverändert bleiben sollte. Erst in einem nächsten Schritt konnte ein neuer Messbereich mit einem neuen Satz von Triangulationsaufnahmen aufgenommen werden. Im Gegensatz dazu werden beim vorliegenden Verfahren die Muster eines Satzes gleichzeitig aufgenommen und der Messbereich somit zum gleichen Zeitpunkt vermessen. Im nächsten Schritt kann die intraorale Kamera relativ zum Objekt bewegt werden und ein benachbarter Messbereich nach einem festgelegten Zeitintervall gleichzeitig aufgenommen werden. Auf diese Weise kann eine Serie von Triangulationsaufnahmen in einer Überflugmessung durchgeführt werden, wobei diese Triangulationsaufnahmen unter Verwendung von computergestützten Methoden zu einer gesamten 3D-Abbildung des Objekts zusammengefügt werden können.

Vorteilhafterweise können das erste Muster und das weitere Muster als Projektionsstrahlen in einer gemeinsamen Projektionsrichtung auf das Objekt projiziert werden.

Die Muster werden durch mehrere Blendenmittel erzeugt und die Projektionsstrahlen können so umgelenkt werden, dass die Muster entlang einer gemeinsamen Projektionsrichtung auf das Objekt projiziert werden. Dadurch kann die intraorale dentale Kamera kompakter gebaut werden und ein Messbereich des Objekts lückenlos aus einer gemeinsamen Aktionsrichtung erfasst werden.

Die Beobachtungsstrahlen der Muster werden aus mindestens zwei Beobachtungsrichtungen aufgenommen, wobei die erste Beobachtungsrichtung zu der weiteren Beobachtungsrichtung um einen Winkel versetzt angeordnet ist.

Dadurch können die projizierten Muster aus mehreren Beobachtungsrichtungen gleichzeitig erfasst werden. Der Winkel zwischen den Beobachtungsrichtungen sollte vorteilhafterweise zwischen 20° und 90° betragen. Es ist zu beachten, dass für die Funktionsweise des Triangulationsverfahrens die Streifen des Musters einen Winkel von mindestens 10° zur Triangulationsebene, die durch die Projektionsrichtung und die Beobachtungsrichtung aufgespannt ist, aufweisen sollten.

Die Beobachtungsstrahlen der Muster werden mittels mehrerer Aufnahmemittel aus den unterschiedlichen Beobachtungsrichtungen in mehreren einzelnen Triangulationsaufnahmen aufgenommen.

Die gleichzeitig projizierten Muster werden folglich von mindestens zwei auseinander liegenden Aufnahmemitteln in mindestens zwei Triangulationsaufnahme erfasst. Durch das Zusammenführen dieser Triangulationsaufnahmen aus unterschiedlichen Beobachtungsrichtungen wird eine höhere Messgenauigkeit erreicht und insbesondere konkave und konvexe Messbereiche des Objekts können vollständig erfasst werden.

Vorteilhafterweise können die Projektionsstrahlen der Muster aus mindestens zwei verschiedenen Projektionsrichtungen auf das Objekt projiziert werden. Die Beobachtungsstrahlen der Muster werden dabei aus einer einzigen Beobachtungsrichtung aufgenommen, wobei die erste Projektionsrichtung zu der weiteren Projektionsrichtung um einen Winkel versetzt angeordnet ist.

Dadurch werden die Muster aus unterschiedlichen Projektionsrichtungen gleichzeitig auf das Objekt projiziert, so dass die Muster das Objekt aus unterschiedlichen Richtungen erfassen und somit ein vollständigeres Bild des Objekts erzeugt wird. Darüber hinaus müssen die Projektionsstrahlen der unterschiedlichen Muster nicht zu einer gemeinsamen Projektionsrichtung umgelenkt werden.

Vorteilhafterweise können die einzelnen Muster zur Unterscheidung untereinander und zur Identifizierung in der mindestens einen Triangulationsaufnahme codiert sein.

Dadurch können die einzelnen Muster in mehreren Triangulationsaufnahmen bei mehreren Aufnahmemitteln aus unterschiedlichen Beobachtungsrichtungen identifiziert werden und getrennt voneinander analysiert werden.

Vorteilhafterweise können die einzelnen Muster farblich codiert sein, indem das erste Muster eine erste Wellenlänge aufweist und das weitere Muster eine davon abweichende Wellenlänge aufweist, wobei mindestens ein Farbsensor als Aufnahmemittel vorhanden ist, dessen Messbereich die Wellenlängen der Muster abdeckt und der eine getrennte Analyse der farblich unterschiedlichen Muster ermöglicht.

Dadurch können die unterschiedlichen Muster gleichzeitig von mindestens einem Farbsensor aufgenommen werden und anhand ihrer Wellenlänge zur getrennten Analyse voneinander unterschieden werden. Das Licht der Muster kann von Lichtquellen unterschiedlicher Wellenlänge ausgestrahlt werden. Dabei kann es sich um monochromatisches Licht mit unterschiedlichen Wellenlängen und um polychromatisches Licht mit unterschiedlichen Spektren handeln.

Vorteilhafterweise können die einzelnen Muster mit einem binären Grauwert-Code versehen sein und anhand dieses Grauwert-Codes die einzelnen Muster in der mindestens einen Triangulationsaufnahme identifiziert werden.

Dadurch können die unterschiedlichen Muster in der gemeinsamen Triangulationsaufnahme identifiziert und getrennt voneinander analysiert werden. Der binäre Grauwert-Code enthält binäre Helligkeitswerte, woraus die Nummer des Musters decodiert werden kann.

Vorteilhafterweise können die Projektionsstrahlen der Muster aus mindestens zwei verschiedenen Projektionsrichtungen auf das Objekt projiziert werden, wobei die Beobachtungsstrahlen der Muster aus mindestens zwei verschiedenen Beobachtungsrichtungen aufgenommen werden.

Dadurch werden die in Muster aus mehreren Projektionsrichtungen auf das Objekt projiziert und der Messbereich des Objekts aus mehreren Beobachtungsrichtungen aufgenommen. Dadurch können mehrere Triangulationsaufnahmen aus verschiedenen Beobachtungsrichtungen erzeugt und überlagert werden, um ein vollständigeres 3D-Modell zu erhalten.

Vorteilhafterweise kann die erste Projektionsrichtung des ersten Musters gegenüber der weiteren Projektionsrichtung des Weiteren Musters einen Winkel größer als 10° aufweisen.

Dadurch unterscheiden sich die Projektionsrichtungen um mindestens 10°, so dass die Lichtquellen und die Blendemittel zum Erzeugen der Muster nebeneinander angeordnet werden können.

Vorteilhafterweise kann die erste Beobachtungsrichtung gegenüber der weiteren Beobachtungsrichtung einen Winkel größer als 10° aufweisen.

Dadurch können die Aufnahmemittel, wie CCD-Sensoren, in den Beobachtungsrichtungen nebeneinander angeordnet werden.

Vorteilhafterweise kann die Auswertung der Triangulationsaufnahmen nach einem Streifenprojektionsverfahren erfolgen, welches auf dem Triangulationsverfahren beruht.

Beim Streifenprojektionsverfahren ist das Muster aus mehreren parallelen Streifen gebildet, wobei die Streifen vorzugsweise senkrecht zur Triangulationsebene ausgerichtet sind. Die Koordinate des Messpunktes wird mittels der oben genannten Verfahren durch Abzählen der Streifen, durch ein Binär-Kode-Verfahren oder durch ein Phasenschiebeverfahren ermittelt.

Zusätzlich zu den Triangulationsaufnahmen werden weitere Zusatzaufnahmen basierend auf dem Prinzip der Photogrammetrie vom Objekt aus unterschiedlichen Beobachtungsrichtungen aufgenommen und bei der Auswertung der Triangulationsaufnahmen berücksichtigt.

Bei der Photogrammetrie handelte sich um eine Gruppe von Messmethoden, um aus fotografischen Aufnahmen eines Objekts aus unterschiedlichen Richtungen seine räumliche Lage und seine dreidimensionale Form zu bestimmen. In der Regel werden hochauflösende digitale Kameras für die fotografischen Aufnahmen verwendet. Die Photogrammetrie ist ein computergestütztes Verfahren, wobei aus den einzelnen fotografischen Aufnahmen durch Mustererkennung und durch die Anwendung der Zentralprojektion 3D-Koordinaten von Objektpunkten ermittelt werden. Die Zusatzaufnahmen werden also aus unterschiedlichen Richtungen aufgenommen und unter Verwendung der Photogrammetrie wird ein zusätzlicher photogrammmetrischer 3D-Datensatz des Objekts erzeugt. Der photogrammmetrische 3D-Datensatz wird mit dem ersten nach dem Triangulationsverfahren erzeugten 3D-Datensatz überlagert, um die Messgenauigkeit zu erhöhen.

Sowohl eine Auswertung der Triangulationsaufnahmen nach dem Prinzip der Streifenprojektion als auch eine Auswertung der Zusatzaufnahmen nach dem Prinzip der Photogrammetrie erfolgt mittels einer Auswerteeinheit.

Die Auswertung der Triangulationsaufnahmen nach dem Prinzip der Streifenprojektion sowie der Zusatzaufnahmen nach dem Prinzip der Photogrammetrie können mittels eines Auswertemittels, wie eines Computers, erfolgen.

Vorteilhafterweise können die Aufnahmemittel CCD-Sensoren sein.

Vorteilhafterweise kann die Auswerteeinheit aus den einzelnen Triangulationsaufnahmen 3D-Daten der jeweils erfassten Bereiche des Objekts erzeugt und diese 3D-Daten zu dem gesamten 3D-Datensatz des Objekts zusammensetzt.

Die Auswerteeinheit kann ein Computer sein. Der Messaufbau der optischen intraoralen dentalen Kamera ist bekannt, wobei insbesondere die Projektionsrichtungen und die Beobachtungsrichtungen sowie die Basislänge zwischen den Aufnahmemitteln und den Lichtquellen räumlich bekannt sind, so dass unter Verwendung des Triangulationsverfahrens die 3D-Daten aus der Projektion eines Musters mittels der Auswerteeinheit berechnet werden können. Unter Verwendung der Winkel der Projektionsrichtungen und der Beobachtungsrichtungen der einzelnen Muster zueinander können die 3D-Daten zu einem gemeinsamen 3D-Datensatz zusammengesetzt werden. Vorteilhafterweise kann eine Anzeigeeinheit vorhanden sein, die den gesamten 3D-Datensatz des Objekts als ein 3D-Modell grafisch anzeigt.

Die Anzeigeeinheit kann ein Computermonitor sein, der den gesamten 3D-Datensatz als ein dreidimensionales Modell darstellen kann.

Vorteilhafterweise können bei der Verwendung des Streifenprojektionsverfahrens die einzelnen Muster aus mehreren parallelen Streifen gebildet sein.

Die mindestens zwei Triangulationsaufnahmen werden aus unterschiedlichen Beobachtungsrichtungen analysiert, wobei die Triangulationsaufnahmen anhand von übereinstimmenden Bereichen überlagert werden. Als Analyseverfahren zum Auffinden der übereinstimmenden Bereiche wird das ICP-Verfahren oder das Topology-Matching-Verfahren verwendet.

Die auf das Objekt projizierten Muster werden aus unterschiedlichen Beobachtungsrichtungen von beabstandeten Aufnahmemitteln, wie CCD-Sensoren, aufgenommen. Die relative Lage der Aufnahmemittel zueinander und ihre Beobachtungsrichtungen sind bekannt, so dass daraus die Lagebeziehung zwischen den Triangulationsaufnahmen berechnet werden und diese Triangulationsaufnahmen zu einem gesamten 3D-Datensatz des Objekts zusammengeführt werden.

Alternativ dazu können auch übereinstimmende Bereiche der Muster in den verschiedenen Triangulationsaufnahmen bestimmt werden und anhand dieser übereinstimmenden Bereiche die Triangulationsaufnahmen überlagert werden. Als Analyseverfahren bieten sich das ICP-Verfahren oder das Topology-Matching-Verfahren an.

Das sogenannte ICP-Verfahren (Iterative Closest Point) wird zur Ausrichtung von 3D-Daten mit zumindest in Teilbereichen ähnlicher Form verwendet.

Das Topology-Matching-Verfahren ist ein Verfahren aus der Bildbearbeitung, das zum Vergleich der verschiedenen Topologien MRGs (Multiresolutional Reeb Graphs) verwendet wird. MRGs eignen sich besonders gut als Suchkriterium für ähnliche 3D-Datensätze. Die Berechnung der Ähnlichkeit erfolgt mit diesem Verfahren schnell und effizient, da nach diesem Verfahren die Lageänderung sowie die Rotation nicht berechnet werden muss.

In einem nicht beanspruchten Beispiel können die 3D-Daten ausschließlich durch die Analyse der Muster der jeweiligen Triangulationsaufnahme erzeugt werden, wobei die einzelnen Streifen durch das Abzählen der Streifen oder durch ein Binär-Code-Verfahren identifiziert werden.

Beim Streifenprojektionsverfahren muss die Koordinate eines Messpunktes in den Triangulationsaufnahmen bestimmt werden. Dazu wird einem Messpunkt der jeweilige Streifen zugeordnet, der diesem Messpunkt erfasst hat. Diese Zuordnung kann durch das oben beschriebene Abzählen der Streifen erfolgen, indem die Folge von Helligkeitswerte auf den Sensor ausgewertet wird und die Nummer des jeweiligen Streifens somit bestimmt wird.

Diese Zuordnung kann auch durch das oben beschriebene Binär-Code-Verfahren (z.B. Gray Code) erfolgen, indem jeder Streifen eine binäre Abfolge von Helligkeitswerten enthält, die die Nummer des Streifens repräsentiert. Beim Auswerten dieses binären Codes kann dann die jeweilige Nummer des Streifens bestimmt werden.

Vorteilhafterweise können die 3D-Daten einer einzelnen Triangulationsaufnahme durch die Analyse von mindestens vier in ihrer Phase unterschiedlichen Mustern in der mindestens einen Triangulationsaufnahme erzeugt werden, wobei ein Phasenschiebeverfahren verwendet wird, um die Koordinate eines Messpunktes zu ermitteln.

Das oben beschriebene Phasenschiebeverfahren (Phase-Shift-Verfahren) erreicht eine höhere Genauigkeit bei der Zuordnung der Projektionskoordinate. Beim Phasenschiebeverfahren werden die 3D-Daten des Objekts erst nach der Auswertung von mindestens vier Einzelaufnahmen von zueinander phasenverschobenen Mustern erzeugt. Die phasenverschobenen Muster werden gleichzeitig auf das Objekt projiziert und in mindestens einer Triangulationsaufnahme aufgenommen. Anschließend werden die einzelnen Muster voneinander separat analysiert. Die Phasenlage der Messpunkte und anschließend ihre Koordinate wird mittels der Auswerteeinheit bestimmt.

Vorteilhafterweise können Projektionsmittel für eine zeitgleiche Projektion von mindestens zwei auf das Objekt projizierten Mustern vorhanden sein.

Diese Projektionsmittel können die Blendenmittel zum erzeugen der Muster und die Umlenkmittel zum Ändern der Projektionsrichtung sein.

Vorteilhafterweise kann in einem ersten Schritt eine erste Gruppe von Mustern in mindestens einer ersten Triangulationsaufnahme unter Verwendung des mindestens einen Aufnahmemittels gleichzeitig aufgenommen werden und in einem weiteren Schritt nach einem festgelegten Zeitintervall eine weitere Gruppe von Mustern in mindestens einer weiteren Triangulationsaufnahme mittels eines weiteren Aufnahmemittels gleichzeitig aufgenommen werden, wobei die Lage der intraoralen dentalen Kamera während des Zeitintervalls relativ. zum aufzunehmenden Objekt geändert wird.

Es wird folglich eine Überflugmessung (on-the-fly-Messung) durchgeführt. Eine erste Gruppe von Mustern wird gleichzeitig in einer ersten Triangulationsaufnahme aufgenommen, die intraorale dentale Kamera wird relativ zum Objekt bewegt und eine weitere Gruppe von Mustern wird gleichzeitig in einer weiteren Triangulationsaufnahme aufgenommen. Es werden also Triangulationsaufnahmen in einer zeitlichen Abfolge mit einem festgelegten Zeitintervall aus unterschiedlichen Richtungen aufgenommen.

Vorteilhafterweise kann aus der ersten Gruppe von Mustern in der ersten Triangulationsaufnahme ein erster 3D-Datensatz des Objekts gewonnen werden und aus der weiteren Gruppe von Mustern in der weiteren Triangulationsaufnahme ein weiterer 3D-Datensatz des Objekts gewonnen werden. Anschließend werden der erste 3D-Datensatz und der weitere 3D-Datensatz zu einer gemeinsamen 3D-Abbildung des Objekts zusammengefügt.

### Kurzbeschreibung der Zeichnung

Ausführungsbeispiele der Erfindung sind in den Zeichnungen dargestellt. Es zeigt die
- Fig. 1: eine Skizze eines nicht beanspruchten Beispiels, umfassend eine dentale intraorale Kamera zur Vermessung mit einer Projektionseinrichtung und einer Beobachtungsriehtung,
- Fig.2A: eine schematische Skizze der intraoralen dentalen Kamera aus Fig. 1 in seitlicher Ansicht mit einer gemeinsamen Projektionsrichtung von zwei Mustern und einer Beobachtungsrichtung,
- Fig. 2B: eine schematische Skizze in der Draufsicht der intraoralen dentalen Kamera aus Fig. 1 mit einer gemeinsamen Projektionsrichtung von zwei Mustern und einer Beobachtungsrichtung,
- Fig. 3: eine schematische Skizze in der Draufsicht mit zwei unterschiedlichen Projektionsrichtungen und einer Beobachtungsrichtung,
- Fig. 4: eine schematische Skizze in der Draufsicht mit einer Projektionsrichtung und mit zwei unterschiedlichen Beobachtungsrichtungen,
- Fig. 5: eine schematische Skizze in der Draufsicht mit zwei Projektionsrichtungen und mit zwei im Beobachtungsrichtungen.
- Fig. 6: eine Skizze eines projizierten Musters auf einem unebenen Objekt bei zwei unterschiedlichen Beobachtungsrichtungen zur Verdeutlichung der Überlagerung von Triangulationsaufnahmen unter Verwendung übereinstimmender Bereiche,
- Fig. 7: eine Skizze zur Verdeutlichung der Überflugmessung mit Triangulationsaufnahmen aus unterschiedlichen Richtungen. Ausführungsbeispiele der Erfindung

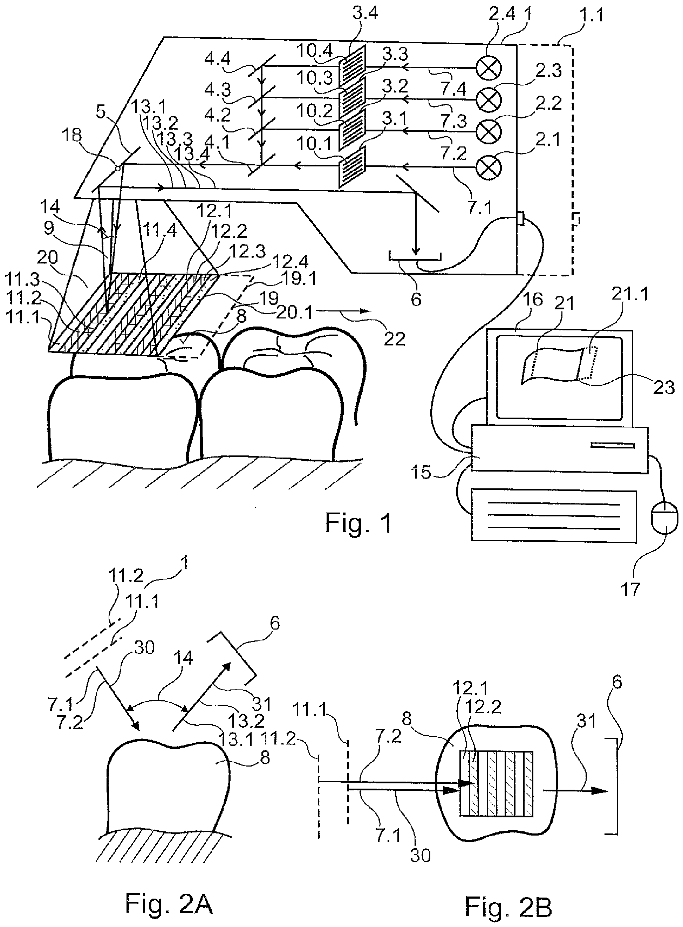

Die Fig. 1 zeigt eine Skizze zur Verdeutlichung eines nicht beanspruchten Beispiels des Verfahrens. Es ist eine intraorale dentale Kamera 1 dargestellt, die vier Lichtquellen 2.1, 2.2, 2.3, 2.4, vier Blendenmittel 3.1, 3.2, 3.3, 3.4, vier Umlenkmittel 4.1, 4.2, 4.3, 4.4, einen Spiegel 5 und einen CCD-Sensor 6 als ein Aufnahmemittel aufweist. Die Lichtquellen 2.1, 2.2, 2.3, 2.4 senden Projektionsstrahlen 7.1, 7.2, 7.3, 7.4 aus, die die als Gitter 3.1, 3.2, 3.3, 3.4 ausgebildeten Blendenmittel durchleuchten, durch Umlenkmittel 4.1, 4.2, 4.3, 4.4 zum Spiegel 5 umgelenkt werden und vom Spiegel 5 auf ein aufzunehmendes Objekt 8, nämlich die Oberfläche eines Zahns, umgelenkt werden. Die Umlenkmittel 4.2, 4.3, 4.4 lenken die Projektionsstrahlen 7.2, 7.3, 7.4 dabei vollständig um, wobei das Umlenkmittel 4.1 halbtransparent ist und den Projektionsstrahl 7.1 durchlässt und die umgelenkten Projektionsstrahlen 7.2, 7.3 und 7.4 teilweise zum Spiegel 5 umlenkt. Die als optische Gitter 3.1, 3.2, 3.3, 3.4 ausgebildeten Blendenmittel weisen zur Triangulationsebene 9 senkrecht angeordnete Schlitze 10.1, 10.2, 10.3, 10.4 auf, so dass beim Durchstrahlen der Gitter 3.1, 3.2, 3.3, 3.4 strukturierte Muster 11.1, 11.2, 11.3, 11.4 erzeugt werden und auf das Objekt 8 projiziert werden. Die Muster 11.1, 11.2, 11.3, 11.4 sind aus parallel zueinander angeordneten Streifen 12.1, 12.2, 12.3, 12.4 aufgebaut. Zur Verdeutlichung sind die parallelen Streifen 12.1 des ersten Musters 11.1 ohne Strichelung dargestellt, die parallelen Streifen 12.2 des zweiten Musters 11.2 mit einfacher Strichelung dargestellt, die parallelen Streifen 12.3 des dritten Musters 11.3 mit einer gekreuzten Strichelung und die parallelen Streifen 12.4 des vierten Musters 11.4 gepunktet dargestellt. Die vier strukturierten Muster 11.1, 11.2, 11.3, 11.4 sind schematisch dargestellt und entsprechen nicht den realistischen Projektionen der Lichtstreifen 12.1, 12.2, 12.3, 12.4 auf das aufzunehmende Objekt 8, sondern verdeutlicht lediglich die Anordnung der Muster 11.1, 11.2, 11.3, 11.4 zueinander sowie die Richtung der Projektion. Die Projektionsstrahlen 7.1, 7.2, 7.3, 7.4 werden von der Oberfläche des aufzunehmenden Objekts 8 reflektiert und als Beobachtungsstrahlen 13.1, 13.2, 13.3, 13.4 in einem gemeinsamen Strahlengang zurückgestrahlt und zum CCD - Sensor 6 umgeleitet und von diesem detektiert. Die Triangulationsebene 9 wird von den Projektionsstrahlen 7.1, 7.2, 7.3, 7.4 und den Beobachtungsstrahlen 13.1, 13.2, 13.3, 13.4 aufgespannt. Die Projektionsstrahlen 7.1, 7.2, 7.3, 7.4 weisen zu den zurückgestrahlten Beobachtungsstrahlen 13.1, 13.2, 13.3, 13.4 einen sogenannten Triangulationswinkel 14 auf. Die mittels des CCD-Sensors 6 aufgenommenen Bilddaten werden an einen Computer als Auswerteeinheit 15 weitergeleitet, der einen Monitor als Anzeigeeinheit 16 und eine Tastatur und eine Computermaus als Bedienungseinheiten 17 aufweist.

Beim vorliegenden Verfahren ist der Spiegel 5 nicht verstellbar und die Muster 11.1, 11.2, 11.3, 11.4 werden gleichzeitig auf das Objekt 8 projektiert, wobei die einzelnen Muster 11.1, 11.2, 11.3, 11.4 um eine Streifenbreite zueinander verschoben sind und die Oberfläche des zu vermessenden Objekts 8 innerhalb eines rechteckförmigen Messbereichs 19 lückenlos erfasst wird. Die Beobachtungsstrahlen 13.1, 13.2, 13.3, 13.4 der einzelnen Muster 11.1, 11.2, 11.3, 11.4 werden vom CCD-Sensor gleichzeitig in einer ersten gemeinsamen Triangulationsaufnahme 20 aufgenommen. Die einzelnen Muster 11.1, 11.2, 11.3, 11.4 sind zur Unterscheidung untereinander codiert, indem das erste Muster 11.1 eine erste Wellenlänge, das zweite Muster 11.2 eine zweite Wellenlänge, das dritte Muster 11.3 eine dritte Wellenlänge und das vierte Muster 11.4 eine vierte Wellenlänge aufweist. Der CCD-Sensor ist dabei so ausgelegt, dass sein Messbereich die Wellenlängen der Muster 11.1, 11.2, 11.3, 11.4 abdeckt und eine getrennte Analyse ermöglicht. Die Bilddaten der ersten Triangulationsaufnahme 20 werden an die Auswerteinheit 15 weitergeleitet und dort die Projektionen der einzelnen Muster 11.1, 11.2, 11.3, 11.4 getrennt voneinander analysiert und mittels des Triangulationsverfahrens 3D-Daten der erfassten Bereiche berechnet. Bei der Berechnung der 3D-Daten mittels des Triangulationsverfahrens werden die Koordinaten der Messpunkte relativ zum Koordinatensystem der intraoralen dentalen Kamera aus dem bekannten Betrag einer Basislänge sowie den bekannten Winkeln des Projektionsstrahls zur Basislänge und des Beobachtungsstrahls zur Basislänge berechnet, wobei die Basislänge eine Verbindungsstrecke zwischen den Lichtquellen 2.1, 2.2, 2.3, 2.4 und dem CCD-Sensor 6 ist, falls der Projektionsstrahl und der Beobachtungsstrahl geradlinig verlaufen.

Die mittels der Auswerteinheit 15 ermittelten 3D-Daten der einzelnen Muster 11.1, 11.2, 11.3, 11.4 werden zu einem gesamten 3D-Datensatz zusammengesetzt, der in der Anzeigevorrichtung 16 als ein 3D-Modell 21 der innerhalb des Messbereichs 19 aufgenommenen Oberfläche des Objekts 8 angezeigt wird.

Bei herkömmlichen Triangulationsmessverfahren werden die Projektionen der unterschiedlichen Muster in zeitlicher Abfolge nacheinander in mehreren Aufnahmen aufgenommen. Dadurch entstehen beim Verwackeln der intraoralen dentalen Kamera zwischen den Aufnahmen Bildfehler. Beim vorliegenden Verfahren sind solche Bildfehler jedoch ausgeschlossen, da die Muster 11.1, 11.2, 11.3, 11.4 in einer gemeinsamen Triangulationsaufnahme gleichzeitig aufgenommen werden. Dies ermöglicht eine Überflugmessung (On-the-fly-Messung), wobei nach der ersten Triangulationsaufnahme 20 die intraorale dentale Kamera 1 in Richtung 22 zu einer zweiten Position 1.1 bewegt wird und in einer zweiten Triangulationsaufnahme 20.1 ein benachbarter Bereich der Oberfläche des Objekts 8 innerhalb eines in die Richtung 22 verschobenen Messbereichs 19.1 aufgenommen wird. Aus der ersten Triangulationsaufnahme wird der erste 3D-Datensatz und aus der zweiten Triangulationsaufnahme 20.1 wird ein zweiter 3D-Datensatz erzeugt. Der zweite 3D-Datensatz wird ebenfalls in der Anzeigevorrichtung als ein 3D-Modell 21.1, das gestrichelt dargestellt ist, mittels der Anzeigevorrichtung 16 angezeigt. Der erste 3D-Datensatz 21 wird mit dem zweiten 3D-Datensatz 21.1 zu einer gemeinsamen 3D-Abbildung 23 zusammengefügt, die mittels der Anzeigevorrichtung 16 angezeigt wird. Bei der Überflugmessung werden in festgelegten Zeitintervallen Triangulationsaufnahmen solange durchgeführt, bis das gesamte aufzunehmende Objekt 8 lückenlos erfasst ist.

Die Figur 2A zeigt eine schematische Skizze der intraoralen dentalen Kamera 1 wie in Fig. 1, wobei die Projektionsstrahlen 7.1, 7.2 der Muster 11.1 und 11.2 entlang einer gemeinsamen Projektionsrichtung 30 auf das Objekt 8 projiziert werden und die Beobachtungsstrahlen 13.1 und 13.2 in einer gemeinsamen Beobachtungsrichtung 31 vom CCD-Sensor 6 aufgenommen werden. Die Muster 11.1 und 11.2 werden von den Blendenmitteln 10.1 und 10.2 erzeugt und mittels der Umlenkmittel 4.1, 4.2 so umgelenkt, dass die Muster entlang einer gemeinsamen Projektionsrichtung 30 auf das Objekt 8 projiziert werden. Dies hat den Vorteil, dass die Auffangvorrichtung 1 kompakter gebaut werden kann und dass der Messbereich 19 lückenlos aus Mustern 11.1 und 11.2 mit gemeinsamer Projektionsrichtung erfasst werden kann. Zur schematischen Vereinfachung sind nur zwei Muster dargestellt. Die Anzahl der Muster kann jedoch beliebig abhängig von der gewünschten Auflösung erhöht werden.

Die Figur 2B zeigt den schematischen Aufbau aus Fig. 2A in der Draufsicht. Die Muster 11.1 und 11.2 werden auf das Objekt 8 projiziert und bilden Projektionen in Form von zueinander parallelen Streifen 12.1 und 12.2. Anschließend werden die Muster in einer gemeinsamen Triangulationsaufnahme 20 aus Fig. 1 mittels des CCD-Sensors 6 in der gemeinsamen Beobachtungsrichtung 31 aufgenommen.

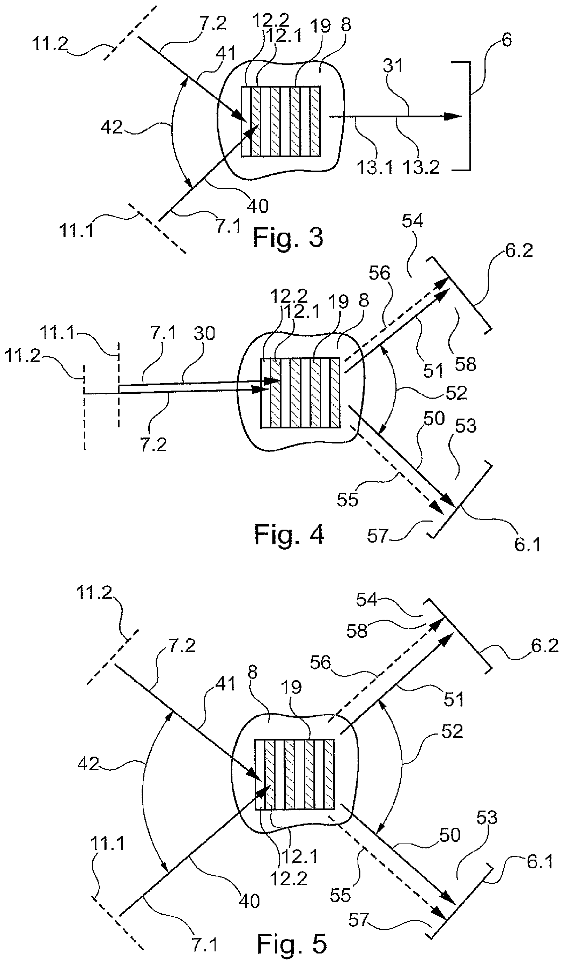

Die Fig. 3 zeigt den schematischen Aufbau in der Draufsicht. Die Muster 11.1 und 11.2 als Projektionsstrahlen 7.1 und 7.2 entlang unterschiedlicher Projektionsrichtungen 40 und 41 auf das Objekt 8 innerhalb des Messbereichs 19 als parallele Streife 12.1 und 12.2 projiziert werden. Die Beobachtungsstrahlen 13.1 und 13.2 der projizierten parallelen Streifen 12.1 und 12.2 werden entlang einer gemeinsamen Beobachtungsrichtung 31 mittels des CCD-Sensors 6 aufgenommen. Die erste Projektionsrichtung 40 weist zur zweiten Projektionsrichtung 41 einen Winkel 42 auf. Dadurch wird das Objekt 8 aus unterschiedlichen Projektionsrichtungen 40 und 41 gleichzeitig erfasst und somit ein vollständigeres Bild des Objekts erzeugt. Die Projektionsstrahlen 7.1 und 7.2 müssen also nicht wie in Fig. 1, Fig. 2 und Fig. 2B in aufwendiger Weise zur einer gemeinsamen Projektionsrichtung 30 umgelenkt werden.

Die Fig. 4 zeigt in schematischer Weise eine weitere Ausführungsform in der Draufsicht, wobei die Projektionsstrahlen 7.1, 7.2 der Muster 11.1, 11.2 entlang einer gemeinsamen Projektionsrichtung 30 auf das Objekt 8 innerhalb eines Messbereichs 19 als parallele Streifen 12.1, 12.2 projiziert werden und anschließend die parallelen Streifen 12.1, 12.2 mittels eines ersten CCD-Sensors 6.1 in einer ersten Beobachtungsrichtung 50 und mittels eines zweiten CCD-Sensors 6.2 in einer zweiten Beobachtungsrichtung 51 aufgenommen werden. Die erste Beobachtungsrichtung 50 weist zur zweiten Beobachtungsrichtung 51 einen Winkel 52 auf. Der Winkel 52 kann größer als 10° sein, so dass die CCD-Sensoren 6.1 und 6.2 nebeneinander angeordnet werden können. Der Vorteil dieser Ausführungsform ist, dass die parallelen Streifen 12.1 und 12.2 aus zwei verschiedenen Beobachtungsrichtungen 50 und 51 gleichzeitig aufgenommen werden und insbesondere bei einer unebenen Oberfläche des Objekts 8 durch Überlagerung einer mittels des ersten CCD-Sensors 6.1 aufgenommen Triangulationsaufnahme 53 und einer zweiten mittels des zweiten CCD-Sensors 6.2 aufgenommenen Triangulationsaufnahme 54 erstellt werden kann.

Ergänzend zu den Triangulationsaufnahme 53 und 54 werden aus den Beobachtungsrichtungen 55 und 56 weitere Zusatzaufnahmen 57 und 58 aufgenommen, die auf dem Prinzip der Photogrammetrie basieren. Dabei werden die gleichen CCD-Sensoren 6.1 und 6.2 verwendet, die neben dem Streifenmuster für die Triangulationsaufnahmen auch fotografische Aufnahmen des Objekts 8 registrieren können. Die Auflösung der CCD-Sensoren 6.1 und 6.2 muss für fotografische Aufnahmen geeignet sein. Die fotografischen Zusatzaufnahmen 57, 58 des Objekts aus den beiden Beobachtungsrichtungen 55, 56 werden mittels der Auswerteeinheit 15 aus Fig. 1 unter Verwendung computergestützter Verfahren, wie der Mustererkennung und der Zentralprojektion, ausgewertet und ein photogrammetrischer 3D-Datensatz des Objekts 8 ermittelt. Der aus den Zusatzaufnahmen 57 und 58 erzeugte photogrammmetrische 3D-Datensatz wird mit dem ersten nach dem Triangulationsverfahren erzeugten 3D-Datensatz überlagert und somit die Messgenauigkeit erhöht.

Die Fig. 5 zeigt den schematischen Aufbau einer weiteren Ausführungsform in der Draufsicht, wobei die Projektionsstrahlen 7.1, 7.2 der Muster 11.1, 11.2 entlang unterschiedlicher Projektionsrichtungen 40, 41 auf das Objekt 8 innerhalb des Messbereichs 19 projiziert werden und anschließend die projizierten parallelen Streifen 12.1, 12.2 entlang einer ersten Beobachtungsrichtung 50 und einer zweiten Beobachtungsrichtung 51 mittels der CCD-Sensoren 6.1 und 6.2 aufgenommen werden. Die erste Projektionsrichtung 40 weist den Winkel 42 zur zweiten Projektionsrichtung 41 auf und die erste Beobachtungsrichtung 50 weist zur zweiten Beobachtungsrichtung 51 den Winkel 52 auf.

Bei den Beispielen aus Fig. 1, Fig. 2A, Fig. 2B und Fig. 4 werden die Projektionsstrahlen 7.1, 7.2 entlang einer gemeinsamen Projektionsrichtung auf das Objekt 8 projiziert. Im Gegensatz dazu werden bei dem Beispiel aus Fig. 3 und Fig. 5 die Projektionsstrahlen 7.1, 7.2 entlang unterschiedlicher Projektionsrichtungen 40, 41 auf das Objekt 8 projiziert, so dass der Abstand der intraoralen dentalen Kamera 1 und somit der Blendemittel 3.1, 3.2 zur Oberfläche des Objekts 8 die Anordnung der parallelen Streifen 12.1 und 12.2 zueinander beeinflusst. Die Blendemittel 3.1, 3.2 sowie der übrige optische Aufbau der intraoralen dentalen Kamera 1 müssen so angeordnet sein, dass bei einem für die Aufnahme festgelegten Abstand zwischen der intraoralen dentalen Kamera 1 und der Oberfläche des Objekts 8 die Streifen 12.1, 12.2 sich nicht überlagern sondern die Oberfläche des Objekts 8 innerhalb des Messbereichs 19 wie dargestellt lückenlos abtasten. Bei den Beispielen aus Fig. 1, Fig. 2A, Fig. 2B und Fig. 4 mit einer einzigen Projektionsrichtung 30 stellt sich diese technische Problem nicht, da die relative Lage der parallelen Streifen 12.1 zu den parallelen Streifen 12.2 sich in Abhängigkeit von Abstand zwischen der intraoralen dentalen Kamera 1 und der Oberfläche des Objekts 8 nicht ändert.

Es werden ergänzend zu den beiden Triangulationsaufnahmen 53 und 54 fotografische Zusatzaufnahmen 57, 58 aufgenommen, aus denen wie in Fig. 4 ein photogrammetrischer 3D-Datensatz erzeugt und mit der ersten 3D-Datensatz 21 aus Fig.1 zur Verbesserung der Messgenauigkeit überlagert wird.

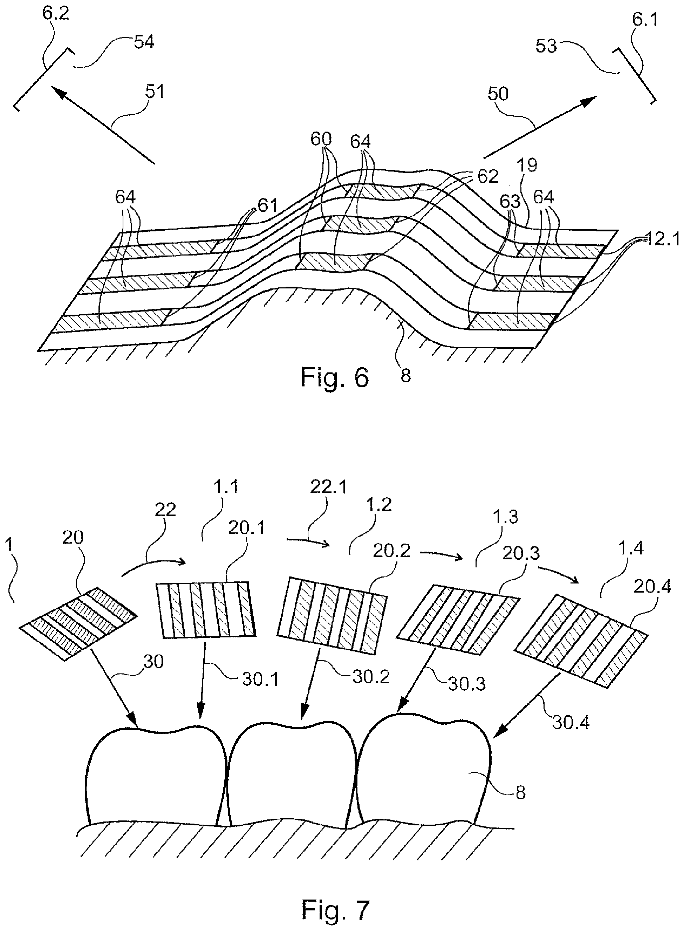

Die Fig. 6 zeigt eine Skizze der projizierten Muster 11.1 und 11.2 auf einer unebenen Oberfläche des Objekts 8 innerhalb des Messbereichs 19. Zur Verdeutlichung sind nur die parallelen Streifen 12.1 des ersten Musters dargestellt. Die Streifen 12.1 des ersten Musters 11.1 werden, wie in der Ausführungsform aus Fig. 4 und Fig. 5, aus einer ersten Beobachtungsrichtung 50 mittels des erstens CCD-Sensors 6.1 und aus einer zweiten Beobachtungsrichtung 51 mittels des zweiten CCD-Sensors 6.2 aufgenommen. Aus den Bilddaten des Sensors 6.1 wird die erste Triangulationsaufnahme 53 und aus den Bilddaten des zweiten CCD-Sensors 6.2 eine zweite Triangulationsaufnahme 54 erzeugt. Mittels der Auswerteeinheit 15 aus Fig. 1 werden die beiden Triangulationsaufnahmen 53 und 54 überlagert und zu einer gemeinsamen 3D-Abbildung 23 aus Fig.1 zusammengefügt. Die Lagebeziehung der ersten Triangulationsaufnahme 53 zur zweiten Triangulationsaufnahme 54 kann anhand der relativen Lage der Aufnahmemittel 6.1, 6.2 zueinander und ihrer Beobachtungsrichtungen 50, 51 berechnet werden.

Alternativ dazu können die Triangulationsaufnahmen 53 und 54 auch anhand übereinstimmender Bereiche der projizierten Muster 11.1 und 11.2 überlagert werden. In der ersten Beoobachtungsrichtung 50 sind die Bereiche der parallelen Streifen 12.1 zwischen den Positionen 60 und 61 aufgrund der Geometrieoberfläche des Objekts 8 nicht sichtbar. In der zweiten Beobachtungsrichtung 51 sind die Bereiche der parallelen Streifen 12.1 zwischen den Positionen 62 und 63 nicht sichtbar. Die beiden Triangulationsaufnahmen 53 und 54 müssen also überlagert und zusammengeführt werden, um ein vollständiges Bild der Oberfläche des Objekts 8 zu erhalten. Die erste Triangulationsaufnahme 53 und die zweite Triangulationsaufnahme 54 weisen übereinstimmende Bereiche 64 auf, die gestrichelt dargestellt sind. Diese übereinstimmende Bereiche 54 können in den Triangulationsaufnahmen 53 und 54 mit computergestützten Analyseverfahren ermittelt werden und anhand dieser übereinstimmender Bereiche 64 die Triangulationsaufnahmen 53 und 54 überlagert werden. Als computergestütztes Analyseverfahren kommt das sogenannte ICP-Verfahren oder das Topology-Matching-Verfahren Verfahren in Frage.

Die Fig. 7 zeigt eine schematische Darstellung zur Verdeutlichung einer Überflugmessung (On-the-fly-Messung). Im dargestellten Fall ist das zu vermessende Objekt 8 eine Zahnreihe bestehend aus drei Zähnen, wobei eine erste Triangulationsaufnahme 20 aus einer ersten Projektionsrichtung 30 aufgenommen wird, die intraorale dentale Kamera 1 in die Richtung 22 zu einer zweiten Position 1.1, wie in Fig. 1, geschwenkt wird, wobei die Richtung 22 einen bogenförmigen Verlauf aufweist, nach einem festgelegten Zeitintervall aus der zweiten Position 1.1 der intraoralen dentalen Kamera 1 eine zweite Triangulationsaufnahme 20.1 in einer zweiten Projektionsrichtung 30.1 aufgenommen wird, die intraorale dentale Kamera 1 zu einer dritten Position 1.2 geschwenkt wird, eine dritte Triangulationsaufnahme 20.2 in einer dritten Projektionsrichtung 30.2 aufgenommen wird die intraorale dentale Kamera 1 zu einer vierten Position 1.3 in einer Richtung 22.2 geschwenkt wird, eine vierte Triangulationsaufnahme 20.3 in einer vierten Projektionsrichtung 30.3 vom Objekt 8 aufgenommen wird, und schließlich die intraorale dentale Kamera 1 in eine fünfte Position 1.4 geschwenkt wird und eine fünfte Triangulationsaufnahme 20.4 in einer fünften Projektionsrichtung 30.4 vom Objekt 8 aufgenommen wird. Die aus den Triangulationsaufnahmen 20, 20.1, 20.2, 20.3, 20.4, wie oben zu Fig. 1 beschrieben, erzeugten 3D-Datensätze werden zu einer gemeinsamen 3D-Abbildung 23 zusammengefügt, die die 3D-Daten des gesamten aufzunehmenden Objekts 8 lückenlos enthält. Die Überflugmessung kann solange fortgeführt werden, bis das gesamte aufzunehmende Objekt 8 lückenlos erfasst ist. Die Triangulationsaufnahmen 20, 20.1, 20.2, 20.3, 20.4 werden anhand der übereinstimmenden Bereiche mittels eines computergestützten Analyseverfahrens zusammengeführt. Als ein Analyseverfahren können die oben genannten ICP-Verfahren und das Topology-Matching-Verfahren verwendet werden.

### Bezugszeichenliste

- 1: intraorale dentale Kamera
- 1.1-1.3: Position
- 2.1-2.4: Lichtquellen
- 3.1-3.4: Blendenmittel
- 4.1-4.4: Umlenkmittel
- 5: Spiegel
- 6: CCD-Sensor
- 6.1: CCD-Sensor
- 6.2: CCD-Sensor
- 7.1-7.4: Projektionsstrahlen
- 8: Objekt
- 9: Triangulationsebene
- 10.1-10.4: Schlitze
- 11.1-11.4: Muster
- 12.1-12.4: Streifen
- 13.1-13.4: Beobachtungsstrahlen
- 14: Triangulationswinkel
- 15: Auswerteeinheit
- 16: Anzeigevorrichtung
- 17: Bedienungeseinheit
- 19: Messbereich
- 20: Triangulationsaufnahme
- 20.1-20.4: Triangulationsaufnahme
- 21: 3D-Modell, 3D-Datensatz
- 21.1: 3D-Modell, 3D-Datensatz
- 22: Richtung
- 22.2: Richtung
- 23: gemeinsamen 3D-Abbildung
- 30: Projektionsrichtung
- 30.1-30.4: Projektionsrichtung
- 31: Beobachtungsrichtung
- 40: Projektionsrichtung
- 41: Projektionsrichtung
- 42: Winkel zwischen den Projektionsrichtungen
- 50: Beobachtungsrichtung
- 51: Beobachtungsrichtung
- 52: Winkel zwischen den Beobachtungsrichtungen
- 53: Triangulationsaufnahme
- 54: Triangulationsaufnahme
- 60: Position am Streifen
- 61: Position am Streifen
- 62: Position am Streifen
- 63: Position am Streifen

## Patentansprüche

1. Verfahren zur optischen Vermessung der dreidimensionalen Geometrie eines Objekts unter Verwendung eines Triangulationsverfahrens mittels einer optischen intraoralen dentalen Kamera (1) umfassend mindestens eine Lichtquelle (2.1-2.4), mindestens ein Blendenmittel (3.1-3.4) zur Erzeugung von strukturierten Mustern (11.1-11.4) und mindestens ein Aufnahmemittel (6, 6.1, 6.2), wobei mittels eines ersten Blendenmittels (3.1) ein erstes Muster (11.1) erzeugt wird und auf das aufzunehmende Objekt (8) als ein erster Projektionsstrahl (7.1) projiziert wird, wobei mittels mindestens eines weiteren Blendenmittels (3.1-3.4) ein weiteres Muster (11.2-11.4) erzeugt wird und auf das aufzunehmende Objekt (8) als ein weiterer Projektionsstrahl (7.2-7.4) projiziert wird, wobei das erste Muster (11.1) und das weitere Muster (11.2-11.4) vom Objekt (8) als Beobachtungsstrahlen (13.1-13.4) zurückgestrahlt werden und von dem mindestens einen Aufnahmemittel (6, 6.1, 6.2) aufgenommen werden, um einen 3D-Datensatz (21) des Objekts zu gewinnen, **dadurch gekennzeichnet, dass** das projizierte erste Muster (11.1) und das weitere Muster (11.2-11.4) in mindestens einer Triangulationsaufnahme (20, 53, 54) unter Verwendung des mindestens einen Aufnahmemittels (6, 6.1, 6.2) gleichzeitig aufgenommen werden, wobei die Beobachtungsstrahlen (13.1-13.4) der Muster (11.1-11.4) aus mindestens zwei Beobachtungsrichtungen (50, 51) aufgenommen werden, wobei die erste Beobachtungsrichtung (50) zu der weiteren Beobachtungsrichtung (51) um einen Winkel (52) versetzt angeordnet istl, wobei die Beobachtungsstrahlen (50, 51) der Muster (11.1-11.4) mittels mehrerer Aufnahmemittel (6.1, 6.2) aus den unterschiedlichen Beobachtungsrichtungen (50, 51) in mehreren einzelnen Triangulationsaufnahmen (53, 54) aufgenommen werden, wobei zusätzlich zu den Triangulationsaufnahmen (20, 53, 54) weitere Zusatzaufnahmen (57, 58) mittels der Aufnahmemittel (6.1; 6.2) basierend auf dem Prinzip der Photogrammetrie vom Objekt (8) aus den unterschiedlichen Beobachtungsrichtungen (56, 57) aufgenommen werden und bei der Auswertung der Triangulationsaufnahmen (53, 54) berücksichtigt werden, wobei sowohl eine Auswertung der Triangulationsaufnahmen (53, 54) nach dem Prinzip der Streifenprojektion als auch eine Auswertung der Zusatzaufnahmen (57, 58) nach dem Prinzip der Photogrammetrie mittels einer Auswerteeinheit (15) erfolgt.

2. Verfahren nach Anspruch 1, **dadurch gekennzeichnet, dass** das erste Muster (11.1) und das weitere Muster (11.2-11.4) als Projektionsstrahlen (7.1-7.4) in einer gemeinsamen Projektionsrichtung (30) auf das Objekt (8) projiziert werden.

3. Verfahren nach Anspruch 1 oder 2, **dadurch gekennzeichnet, dass** die Projektionsstrahlen (7.1-7.4) der Muster (11.1-11.4) aus mindestens zwei verschiedenen Projektionsrichtungen (40, 41) auf das Objekt (8) projiziert werden, wobei die erste Projektionsrichtung (41) zu der weiteren Projektionsrichtung (42) um einen Winkel (42) versetzt angeordnet ist.

4. Verfahren nach einem der Ansprüche 1 bis 3, **dadurch gekennzeichnet, dass** die Projektionsstrahlen (7.1-7.4) der Muster (11.1-11.4) aus mindestens zwei verschiedenen Projektionsrichtungen (40, 41) auf das Objekt (8) projiziert werden und dass die Beobachtungsstrahlen (13.1-13.4) der Muster (11.1-11.4) aus mindestens zwei verschiedenen Beobachtungsrichtungen (50, 51) aufgenommen werden.

5. Verfahren nach einem der Ansprüche 1 bis 4, **dadurch gekennzeichnet, dass** die Aufnahmemittel (6, 6.1, 6.2) CCD-Sensoren sind.

## Claims

1. Method for optical measurement of the three-dimensional geometry of an object using a triangulation method by means of an optical intraoral camera (1), which comprises at least one light source (2.1-2.4), at least one shutter means (3.1-3.4) for generating structured patterns (11.1-11.4) and at least one recording means (6, 6.1, 6.2), wherein a first pattern (11.1) is generated with the aid of a first shutter means (3.1) and projected onto the object to be recorded (8) as a first projection beam (7.1), wherein a further pattern (11.2-11.4) is generated with the aid of at least one further shutter means (3.1-3.4) and projected onto the object to be recorded (8) as a further projection beam (7.2-7.4), wherein the first pattern (11.1) and the further pattern (11.2-11.4) are reflected by the object (8) as observation beams (13.1-13.4) and recorded by the at least one recording means (6, 6.1, 6.2) in order to obtain a 3D data record (21) of the object, **characterized in that** the projected first pattern (11.1) and the further pattern (11.2-11.4) are recorded at the same time in at least one triangulation recording (20, 53, 54) using the at least one recording means (6, 6.1 , 6.2), wherein the observation beams (13.1-13.4) of the patterns (11.1-11.4) are recorded from at least two observation directions (50, 51), wherein the first observation direction (50) is offset relative to the further observation direction (51) by an angle (52), whereby the observation beams (50, 51) of the patterns (11.1-11.4) are recorded from the different observation directions (50, 51) using a plurality of recording means (6.1, 6.2) in a plurality of individual triangulation recordings (53, 54), wherein, in addition to the triangulation recordings (20, 53, 54), further additional recordings (57, 58) are recorded from the different observation directions (56, 57) using the recording means (6.1, 6.2) on the basis of the principle of the photogrammetry of the object (8) and taken into account in the evaluation of the triangulation recordings (53, 54), wherein both an evaluation of the triangulation recordings (53, 54) according to the principle of fringe projection and an evaluation of the additional recordings (57, 58) according to the principle of photogrammetry is performed with the aid of an evaluation unit (15).

2. Method according to Claim 1, **characterized in that** the first pattern (11.1) and the further pattern (11.2-11.4) are projected onto the object (8) in a common projection direction (30) as projection beams (7.1-7.4).

3. Method according to Claim 1 or 2, **characterized in that** the projection beams (7.1-7.4) of the patterns (11.1-11.4) are projected onto the object (8) from at least two different projection directions (40, 41), wherein the first projection direction (41) is offset relative to the further projection direction (42) by an angle (42).

4. Method according to any one of Claims 1 to 3, **characterized in that** the projection beams (7.1-7.4) of the patterns (11.1-11.4) are projected onto the object (8) from at least two different projection directions (40, 41), and that the observation beams (13.1-13.4) of the patterns (11.1-11.4) are recorded from at least two different observation directions (50, 51).

5. Method according to any one of Claims 1 to 14, **characterized in that** the recording means (6, 6.1, 6.2) are CCD sensors

## Revendications

1. Procédé pour la mesure optique de la géométrie tridimensionnelle d'un objet par l'utilisation d'un procédé de triangulation au moyen d'une caméra dentaire intra-orale (1) comprenant au moins une source de lumière (2.1-2.4), au moins un moyen de diaphragme (3.1-3.4) pour la génération de motifs structurés (11.1-11.4) et au moins un moyen d'enregistrement (6, 6.1, 6.2), un premier motif (11.1) étant généré au moyen d'un premier moyen de diaphragme (3.1) et projeté sur l'objet à photographier (8) en tant qu'un premier faisceau de projection (7.1), un autre motif (11.2-11.4) étant généré au moyen d'au moins un autre moyen de diaphragme (3.1-3.4) et projeté sur l'objet (8) à photographier en tant qu'un autre faisceau de projection (7.2-7.4), le premier motif (11.1) et l'autre motif (11.2-11.4) étant réfléchis par l'objet (8) en tant que faisceaux d'observation (13.1-13.4) et enregistrés par l'au moins un moyen d'enregistrement (6, 6.1, 6.2) pour obtenir un ensemble de données 3D (21) de l'objet, **caractérisé en ce que** le premier motif (11.1) projeté et l'autre motif (11.2-11.4) sont enregistrés simultanément dans au moins une enregistrement par triangulation (20, 53, 54) en utilisation de l'au moins un moyen d'enregistrement (6, 6.1, 6.2), les faisceaux d'observation (13.1-13.4) des motifs (11.1-11.4) étant enregistrés à partir d'au moins deux directions d'observation (50, 51), la première direction d'observation (50) étant disposée décalée d'un angle (52) par rapport à l'autre direction d'observation (51), les faisceaux d'observation (50, 51) des motifs (11.1-11.4) étant enregistrés au moyen de plusieurs moyens d'enregistrement (6.1, 6.2) à partir des différentes directions d'observation (50, 51) dans plusieurs enregistrements par triangulation (53, 54) individuels, outre les enregistrements par triangulation (20, 53, 54) d'autres enregistrements supplémentaires (57, 58) étant enregistrés sur la base du principe de la photométrie de l'objet (8) au moyen des moyens d'enregistrement (6.1, 6.2) à partir des différentes directions d'observation (56, 57) et pris en compte lors de l'évaluation des enregistrements par triangulation (53, 54), une évaluation des enregistrements par triangulation (53, 54) selon le principe de la projection de franges ainsi qu'une évaluation des enregistrements supplémentaires (57, 58) selon le principe de la photométrie étant réalisées au moyen d'une unité d'évaluation (15).

2. Procédé selon la revendication 1, **caractérisé en ce que** le premier motif (11.1) et l'autre motif (11.2-11.4) sont projetés sur l'objet (8) en tant que faisceaux de projection (7.1-7.4) dans une direction de projection commune (30).

3. Procédé selon la revendication 1 ou 2, **caractérisé en ce que** les faisceaux de projection (7.1-7.4) des motifs (11.1-11.4) sont projetés sur l'objet (8) à partir d'au moins deux directions de projection (40, 41) différentes, la première direction de projection (41) étant disposée décalée d'un angle (42) par rapport à l'autre direction de projection (42).

4. Procédé selon l'une quelconque des revendications 1 à 3, **caractérisé en ce que** les faisceaux de projection (7.1-7.4) des motifs (11.1-11.4) sont projetés sur l'objet (8) à partir d'au moins deux directions de projection (40, 41) différentes et que les faisceaux d'observation (13.1-13.4) des motifs (11.1-11.4) sont enregistrés à partir d'au moins deux directions d'observation (50, 51) différentes.

5. Procédé selon l'une quelconque des revendications 1 à 4, **caractérisé en ce que** les moyens d'enregistrement (6, 6.1, 6.2) sont des capteurs CCD.
